# EUROPEAN PATENT APPLICATION

(11) **EP 1 500 922 A2**
(43) Date of publication of application: **26.01.2005**
(21) Application number: 04017327.0
(22) Date of filing: 22.07.2004
(51) Int. Cl.: G01N 21/66

(54) **Electroluminescent gas sensor and gas detection method**

(30) Priority: 25.07.2003 JP 2003279915
(71) Applicant: Kabushiki Kaisha Toyota Jidoshokki, Kariya-shi, Aichi-ken (JP)
(72) Inventor: Ito, Hironori, Kariya-shi Aichi-ken (JP); Kato, Yoshifumi, Kariya-shi Aichi-ken (JP)
(74) Representative: Leson, Thomas Johannes Alois, Dipl.-Ing.

(57) **Abstract**

A method and device for detecting gas in the ambient atmosphere and/or the concentration of gas in the ambient atmosphere by providing an electroluminescence device. The detection is performed based on the presence of a dark spot in the electroluminescence device, which is caused by exposure of the electroluminescence device to gas in the ambient atmosphere.

## Description

The present invention relates to a method for detecting at least one of gas or water, and a sensor for use in the method. The present further relates to a method for storing the sensor, and a storage vessel.

A display apparatus using an electroluminescence device such as an organic electroluminescence device or inorganic electroluminescence device has received attention because of excellent display performance. The electroluminescence device has an electroluminescence layer, and an anode and a cathode stacked with the electroluminescence layer therebetween. A luminous layer emits light by applying a predetermined voltage between the positive electrode (anode) and the cathode.

However, if the electroluminescence device is left standing in a room without being sealed, a non-luminous area called a dark spot is generated. If it is still left standing, the number of dark spots may increase, or each dark spot may widen.

Even though the electroluminescence device is protected by a substrate, a passivation film, a sealing can or the like, a dark spot is generated if the protection is not sufficient. It is known that generation of dark spots on the electroluminescence device may be caused by a very small amount of water, oxygen or the like.

It is generally thought that a dark spot is generated because at least one of a pair of electrodes and the electroluminescence layer constituting the electroluminescence device is caused to degenerate by gas such as oxygen, water vapor and the like. Examples of the degeneration include oxidation of the electrode and the electroluminescence layer caused by water and oxygen, and oxidized areas in the device are no longer luminous.

Thus, various sealing techniques for preventing generation of dark spots have been considered.

Japanese Patent Laid-Open No. 9-35868 discloses prior art in which a sealing layer having a dissolved oxygen concentration of 1 ppm or less, which is made of an inert liquid containing an absorbent, is provided in the outer periphery of the organic electroluminescence device.

A moistureproof barrier film applicable to an organic electroluminescence display of a resin substrate has been also proposed (e.g. see Akira Sugimoto, et al., "Development of Organic Electroluminescence Film Display", PIONEER R&D, vol. 11, No. 3, p. 48-56).

The inventors thought of using dark spots as an advantage rather than considering them as a defect. That is, the inventors invented a gas sensor and a gas detection method using an electroluminescence device as a means for detecting the existence of water and gas. The inventors also invented a method for storing the sensor and a storage vessel.

In one embodiment, a method for detecting the presence of a gas in an ambient atmosphere which generates a dark spot in an electroluminescence device when the gas is in contact with the electroluminescence device is provided. The method is **characterized by** comprising exposing an electroluminescence device to the ambient atmosphere, detecting generation of the dark spot, and determining whether the gas is present in accordance with the presence of the dark spot.

Furthermore, in the claims, and specification of this application, "A and/or B" denotes "at least one of A and B".

In another embodiment, a gas detection method is characterized in that by detecting at least one of the increasing rate of the total area of a dark spot in an electroluminescence device and the number of dark spots generated in the electroluminescence device, gas in the ambient atmosphere and/or the concentration of gas in the ambient atmosphere are detected.

Furthermore, the increasing rate of the total area of a dark spot means an increase in total area of a dark spot per unit time.

In another embodiment, a gas detection method is characterized by detecting existence of gas in the ambient atmosphere, by way of detecting at least one of generation of dark spots in an electroluminescence device and increase of the total area of dark spots in the electroluminescence device.

The gas detected in the above gas detection method is a gas causing at least one layer forming the electroluminescence device to degenerate. Such gases include, for example, a gas oxidizing or reducing at least one layer forming the electroluminescence device, e.g. oxygen, water vapor and air.

Thus, the above detection method may be used as, for example, a method for detecting a degree of vacuum, a method for detecting an oxygen concentration, a method for detecting a humidity, and a method for checking for existence of a specified gas.

A gas sensor according to one embodiment of the present invention is characterized in that an electroluminescence device is used as a detection section for detecting gas, and gas in the ambient atmosphere and/or the concentration of gas in the ambient atmosphere are detected by a dark spot in the electroluminescence device.

A gas sensor according to another embodiment of the present invention is characterized in that an electroluminescence device is used as a detection section for detecting gas, and by detecting at least one of the increasing rate of the total area of dark spots in the electroluminescence device and the number of dark spots generated in the electroluminescence device, gas in the ambient atmosphere and/or the concentration of gas in the ambient atmosphere are detected.

A gas sensor according to another embodiment of the present invention is characterized in that an electroluminescence device is used as a detection section for detecting gas, and by detecting at least one of generation of a dark spot in an electroluminescence device and increase of the total area of dark spots in the electroluminescence device, existence of gas in the ambient atmosphere is detected. It may be a sensor for detecting two or more types of gases.

A gas detecting apparatus according to one embodiment of the present invention is characterized by comprising a gas sensor of the present invention, and detecting gas and/or the concentration thereof by a change in luminance when a predetermined voltage is continuously applied to an electroluminescence device, or by a change under the condition that the electroluminescence device emits light with a predetermined brightness.

The apparatus may further comprise a luminance measurement section for measuring luminance of the electroluminescence device, and detecting gas based on the result of measurement by the luminance measurement section.

For example, the apparatus may be an apparatus for measuring via the luminance measurement section a change in luminance associated with at least one of phenomena of:
(i) growth rate of a dark spot in the electroluminescence device;
(ii) the number of dark spots generated in the electroluminescence device;
(iii) generation of a dark spot in the electroluminescence device; and
(iv) enlargement of areas of dark spots in the electroluminescence device, and outputting at least one of:
   (a) the result of detection of gas in the ambient atmosphere;
   (b) the concentration of gas in the ambient atmosphere; and
   (c) the result of existence of gas in the ambient atmosphere, based on the result of the measurement.

Furthermore, since there are predetermined relations between (i) to (iv) and (a) to (c) , and between a dark spot and existence or the concentration of gas in the ambient atmosphere, a relational expression and a matching table between a luminance or changing rate in luminance and the concentration can be made according to a sensor design. Thus, by substituting a result of measurement by the luminance measurement section into (matching it to) the relational expression or the matching table, gas and the concentration thereof can be detected. This work may be performed by the luminance measurement section, or a calculation section performing the work may be provided separately.

A gas detecting apparatus according to another embodiment of the present invention is characterizedby comprising the above gas sensor, and detecting gas and/or the concentration thereof by the area of dark spots in an electroluminescence device.

For example, the apparatus may further comprise a measurement section measuring the area of dark spots in the electroluminescence, and detect gas based on the result of measurement by the measurement section. That is, based on the result of measurement, enlargement of the area of dark spots and the increasing rate of the total area of dark spots are determined and from the result thereof, gas and the like or the concentration of gas may be detected.

Another gas detecting apparatus of the present invention is characterizedby including the above gas sensor, and detecting gas and/or the concentration thereof by a change in current value or voltage value required for illuminating an electroluminescence device at a predetermined luminance.

For example, the apparatus may further comprise a luminance measurement section for measuring the luminance of the electroluminescence device, a determination section for determining a current value or voltage value for illuminating the electroluminescence device at a predetermined luminance based on the value measured by the luminance measurement section, and a power source section for applying to the electroluminescence device, a current or voltage based on the result of the determination by the determination section, wherein gas is detected based on the result of determination by the determination section.

A gas detecting apparatus according to another embodiment of the present invention is characterized by comprising the above gas sensor, and detecting gas and/or the concentration thereof based on a change in voltage value in an electroluminescence device when a predetermined current or voltage is applied to the electroluminescence device.

For example, the apparatus may comprise a power source section for applying a voltage of predetermined magnitude to the electroluminescence device, a measurement section for measuring a voltage value in the electroluminescence device, and a determination section for determining whether the voltage value is a predetermined value or not, and detecting gas based on the result of determination by the determination section.

A gas detecting apparatus according to each embodiment described above may be used as, for example, as an apparatus for measuring humidity in the ambient atmosphere, an apparatus for measuring the degree of vacuum in the ambient atmosphere, and an apparatus for measuring oxygen in the ambient atmosphere. Of course, it may be used for other purposes, and may be used as an apparatus for detecting a specified gas or an apparatus for detecting two or more types of gases.

A method for storing a gas sensor according to the present invention is characterized in that at least an electroluminescence device is placed in an inert gas for the device or placed under vacuum until it is used.

A storage vessel for a gas sensor according to the present invention is characterized by comprising a storage section storing at least an electroluminescence device, with the storage section comprising a switching member switching between isolation from and exposure to the exterior of the storage vessel. That is, the storage vessel can store at least the electroluminescence device in the storage section, and isolate the interior of the storage section from the ambient atmosphere. Thus, if the electroluminescence device is stored (housed) in the storage section, and the interior of the storage section is isolated from the ambient atmosphere, the above method for storing a gas sensor can be performed.

The storage vessel may have any of configurations (I) to (IV) described below.
(I) Configuration in which the storage vessel comprises a filling section filled with an inert gas relative to the electroluminescence device, in the storage section.
   That is, the inert gas is fills the storage section when the interior of the storage section is isolated from the ambient atmosphere.
(II) Configuration in which the storage vessel comprises a connection section connecting the interior of the storage section to an externally provided device filled with an inert gas relative to the electroluminescence device, and the connection section comprises a mechanism which is opened when both sections are connected, and isolated from the exterior of the storage section when both sections are not connected.
   That is, the storage vessel comprises a connection section connecting the interior of the storage section to the inert gas filling device provided externally for filling the storage section with the inert gas when the interior of the storage section is isolated from the ambient atmosphere. The connection section comprises a mechanism such as, for example, a valve or shutter, which allows the inert gas to pass into the storage section when the gas is flowing fromthe filling device, and cuts off (isolates) the interior of the storage section from the exterior thereof when the inert gas is not flowing.
   Thus, if this configuration is employed, the storage section can be filled with the inert gas when the electroluminescence device is stored in the storage section.
(III) Configuration in which the storage vessel comprises a suction section producing an approximate vacuum in the storage section.
   If this configuration is employed, the electroluminescence device can be stored under vacuum.
(IV) Configuration in which the storage vessel comprises a connection section connecting the interior of the storage section to a suction section provided outside, and the connection section comprises a mechanism which is opened when both sections are connected, and isolated from the exterior of the storage section when both sections are not connected.

In this configuration, the connection section comprises a mechanism, such as a valve or shutter, which can be connected to a suction device such as an aspirator or suction pump provided externally, and allows the interior of the storage section to communicate with the exterior (suction device) when being suctioned by the suction device, and cuts off (isolates) the interior of the storage vessel from the exterior when not being suctioned by the suction device in configuration (II).

Thus, if this mechanism is employed, the electroluminescence device can be stored under vacuum.

Furthermore, when the above gas sensor is stored in the storage vessel, the entire sensor may be stored in the storage section, or only the electroluminescence device may be stored in the storage section. Furthermore, the electroluminescence device may be removed from the sensor to store only the device in the storage section. Furthermore, a part of the sensor including the device may be stored, or the part may be removable from the sensor main body so that the removed part is stored in the storage section.

A method for storing a gas detecting apparatus according to the present invention is characterized in that at least an electroluminescence device is placed under inert gas for the device or placed under vacuum until it is used.

A storage vessel for storing at least an electroluminescence device of a gas detecting apparatus according to the present invention is characterized by comprising a storage section storing at least the electroluminescence device, the storage section comprising a section isolated from or exposed to the exterior of the storage vessel. That is, the storage vessel can store at least the electroluminescence device in the storage section, and isolate the interior of the storage section from the ambient atmosphere.

The storage vessel may have any of configurations (V) to (VIII) described below.
(V) Configuration in which the storage vessel comprises a filling section filling the storage section with an inert gas relative to the electroluminescence device.
   Employment of this configuration allows at least the electroluminescence device to be stored under an inert gas.
(VI) Configuration in which the storage vessel comprises a connection section connecting the interior of the storage section to a device provided externally for filling the interior of the storage section with an inert gas relative to the electroluminescence device, and the connection section comprises a mechanism which is opened when both sections are connected, and isolated from the exterior of the storage section when both sections are not connected.
   This configuration is equivalent to configuration (II) described above, and allows at least the electroluminescence device to be stored under inert gas.
(VII) Configuration in which the storage vessel comprises a suction section providing an approximate vacuum in the storage section.
   Employment of this configuration allows at least the electroluminescence device to be stored under vacuum.
(VIII) Configuration in which the storage vessel comprises a connection section connecting the interior of the storage section to a suction section provided externally, and the connection section comprises a mechanism which is opened when both sections are connected, and isolated from the exterior of the storage section when both sections are not connected.

This configuration is equivalent to configuration (IV) described above, and allows at least the electroluminescence device to be stored under vacuum.

Furthermore, when the above gas sensor is stored in the storage vessel for gas detecting apparatus, the entire sensor may be stored in the storage section, or only the electroluminescence device may be stored in the storage section. Furthermore, the electroluminescence device may be removed from the sensor to store only the device in the storage section. Furthermore, a part of the sensor including the device may be stored, or the part may be removable from the sensor main body so that the removed part is stored in the storage section.

The invention, together with objects and advantages thereof, may best be understood by reference to the following description of the presently preferred embodiments together with the accompanying drawings in which:
FIG. 1 is a schematic sectional view of an organic electroluminescence device;
FIG. 2 is a schematic sectional view of the organic electroluminescence device;
FIG. 3(a) is a schematic sectional view of the organic electroluminescence device;
FIG. 3(b) is a schematic sectional view showing a cover member;
FIG. 3(c) is a schematic sectional view showing another cover member;
FIG. 4 is a schematic sectional view of the organic electroluminescence device protected by a sealing can;
FIG. 5 is a block diagram of a gas detecting apparatus;
FIG. 6 is a block diagram of another gas detecting apparatus;
FIG. 7 is a block diagram of another gas detecting apparatus;
FIG. 8 is a block diagram of another gas detecting apparatus;
FIG. 9 is a schematic sectional view of a storage vessel;
FIG. 10 (a) is a schematic sectional view of another storage vessel;
FIG. 10 (b) is a sectional view of a non-return valve; and
FIG. 11 is a schematic sectional view of another storage vessel.

A gas sensor, a gas detecting apparatus and a storage vessel thereof according to an embodiment of the present invention will be described, and also a gas detection method and a method for storing the sensor and the detection apparatus will be described below. First, the gas sensor according to this embodiment will be described.

### <Gas Sensor>

The gas sensor according to this embodiment uses findings (gas detection method) discovered by the inventors. First, the findings will be described.

### <Gas Detection Method: Operation Mechanism of Gas Sensor>

The inventors found the following facts about an electroluminescence device, such as an organic electroluminescence device or inorganic electroluminescence device.
(A) If a protection layer (passivation film or sealing can) of the electroluminescence device has a through-hole or the like under presence of gas, and gas enters the device, dark spots are generated in the device.
   The dark spot is a non-luminous area in the electroluminescence device.
(B) For an electroluminescence device that already has dark spots, the total area of dark spots increases if water or gas can enter (enters) the device.
   Cases where the total area increases include cases where one dark spot grows to widen the total area of dark spots, and the cases where the number of dark spots (generated) increases to widen the total area.
(C) The increasing rate of the total area of dark spots generated in the electroluminescence device varies depending on the concentration of gas in the ambient atmosphere. That is, when the electroluminescence device is placed for a predetermined time period at a location in an ambient atmosphere where the concentration of gas is high compared with when the electroluminescence device placed for a predetermined time period at a location where the concentration of gas is low, the total area of dark spots of the electroluminescence device placed for a predetermined time period at a location where the concentration of gas is high is larger than the total area of dark spots of the electroluminescence device placed at a location where the concentration of gas is low.

Furthermore, there is a predetermined relation between the increasing rate of the total area of dark spots and the concentration of gas in the ambient atmosphere. Thus, a mathematical expression or matching table relating the speed to the concentration can be created.

Furthermore, it has been found that for some electroluminescence devices, there may also be a predetermined relation between the generation rate of dark spots and the concentration of gas in the ambient atmosphere. The generation rate means the number of dark spots generated per unit time.

Based on the findings, the inventors have developed a gas detection method according to this embodiment.

This detection method is a method of performing at least one of the following detections (a) and (b) with a dark spot of the electroluminescence device. Of course, both detections (a) and (b) may be performed.
(a) Detection of gas in the ambient atmosphere.
(b) Detection of the concentration of gas in the ambient atmosphere.

That is, from the above findings, it has been found that (a) detection of gas and (b) detection of the concentration of gas can be performed with a dark spot of the electroluminescence device.

For example,
(a1) It can be determined that gas exists in the ambient atmosphere on the ground that a dark spot was generated in an electroluminescence device previously free from a dark spot.
(a2) It can be determined that gas exists in the ambient atmosphere on the ground that in the electroluminescence device having a dark spot, another dark spot was newly generated.
(a3) It can be determined that water or gas exists in the ambient atmosphere on the ground that in the electroluminescence device having a dark spot, the area of the dark spot increased.

Furthermore,
(b1) An electroluminescence device free from a dark spot placed in the ambient atmosphere for a predetermined time period, and the amount, i.e., concentration, of gas in the ambient atmosphere can be detected by the increasing rate of the total area of dark spots generated.
(b2) The electroluminescence device having a dark spot is exposed to the ambient atmosphere for a predetermined time period, and the concentration of water or gas in the ambient atmosphere can be detected by the speed at which the number of dark spots increases.

A matching table or the like between the number or area of dark spots generated, the ratio of the area of dark spots to the area of the luminous region, or the like and the amount (ratio) of gas in the ambient atmosphere when the electroluminescence device is exposed to the ambient atmosphere for a predetermined time period is prepared in advance based on the relationship between the electroluminescence device and the concentration of gas in the ambient atmosphere, and the table or the like is referred, whereby the concentration of gas can be detected.

Thus, the above detection (a) and/or (b) can be performed using any of the following methods (i) and (ii).
(i) Measurement of the growth rate of dark spots in the electroluminescence device (increasing rate of the total area of dark spots in a predetermined time period, etc.).
(ii) Measurement of the number of dark spots generated in the electroluminescence device.

By detecting (iii) existence/nonexistence of a dark spot generated in the electroluminescence device or (iv) increase of the area of dark spots in the electroluminescence device, (c) it can be determined that gas is present in the ambient atmosphere.

Gases that can be detected by the above detection method include a gas causing at least one layer forming the electroluminescence device to degenerate. For example, it can be considered that if a gas causing the electrode or electroluminescence layer forming the electroluminescence device to degenerate enters the electroluminescence device, any of the layers can degenerate to prevent passage of currents or generation of excitors (preventing entry into an excited state) in the electroluminescence layer, resulting in generation of a dark spot.

Such gases may include, for example, gases oxidizing or reducing at least one layer forming the electroluminescence device, e.g., CO and CO₂, H₂S, NH₃, HCN, HCl, COCl₂, Cl₂, NOₓ, SO₂, O₂, C₃H₈, etc. Among them, oxygen and air can be detected accurately.

Furthermore, of these gases, two or more gases may be detected, or only one gas may be detected. Furthermore, as described previously, water (H₂O, water vapor, smoke) may be detected along with these gases, or only water may be detected.

For the above detection method, the detection sensitivity can be extremely increased if an organic electroluminescence device is used. This is because the organic electroluminescence device allows a dark spot to be generated very easily.

The configuration of a gas sensor using the above detection method will now be described in detail. Furthermore, a sensor using an organic electroluminescence device will be described below, but it can be modified into a sensor using an inorganic electroluminescence device.

### <Configuration of Gas Sensor>

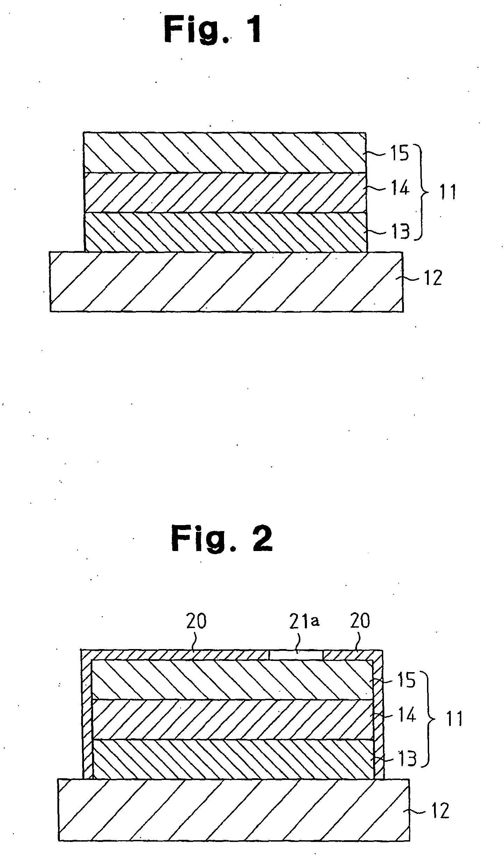

FIG. 1 is a schematic sectional view of an organic electroluminescence device constituting a detection section of a sensor.

As shown in FIG. 1, the organic electroluminescence device 11 is formed on a substrate 12, and comprises an anode 13, an organic electroluminescence layer 14 and a cathode 15. A member provided on the light extraction side with respect to the organic electroluminescence layer 14, of the organic electroluminescence device 11 and the substrate 12, is transparent to light having a wavelength emitted outward from the organic electroluminescence device 11. Furthermore, of course, the electroluminescence device 11 can be formed in the order of the cathode 15, the organic electroluminescence layer 14 and the anode 13 on the substrate 12.

Each layer will be described below.

### [Anode 13]

The anode 13 is an electrode injecting a positive hole into the organic electroluminescence layer 14 (positive hole transport layer in the configuration described later). Thus, a material for formation of the anode 13 may be any material imparting this nature to the anode 13, well known materials such as metals, alloys, electrically conductive compounds and mixtures thereof are generally selected, and the electrode is manufactured such that the work function of the surface (face contacting the organic electroluminescence layer 14) is 4eV or greater.

Materials for formation of the anode 13 include, for example, the following materials:
metal oxides and metal nitrides such as ITO (indium-tin-oxide) , IZO (indium-zinc-oxide), tin oxide, zinc oxide, zinc aluminum oxide, and titanium nitride; metals such as gold, platinum, silver, copper, aluminum, nickel, cobalt, lead, chromium, molybdenum, tungsten, tantalum and niobium; alloys of these metals, alloys of copper iodide, etc.; and conductive polymers such as polyaniline, polythiophene, polypyrrole, polyphenylene vinylene, poly(3-methylthiophene) and polyphenylene sulfide.

If the anode 13 is provided on the light extraction side from the organic electroluminescence layer 14, generally, it is set so that the transmittance for extracted light is greater than 10%. If light in the visible range is extracted, ITO having a high transmittance in the visible range is suitably used.

If the anode 13 is used as a reflecting electrode, a material having a capability of reflecting the light to be extracted outside is appropriately selected from the materials described above, and a metal, alloy or metal compounds are generally selected.

The anode 13 may be formed by one type of the materials described above, or may be termed by mixing two or more types. Furthermore, it may be a multilayered structure composed of multiple layers of the same composition or different compositions.

If the resistance of the anode 13 is high, an auxiliary electrode should be provided to reduce the resistance. The auxiliary electrode is a metal such as copper, chromium, aluminum, titanium or an aluminum alloy or a layered product thereof partially provided in the anode 13.

The anode 13 is formed by a well known thin film formation method such as a sputtering method, ion plating method, vacuum vapor deposition method, spin coating method or electron beam deposition method using the above mentioned materials.

Furthermore, the surface may be subjected to UV ozone cleaning or plasma cleaning.

For inhibiting generation of shorts and defects in the organic EL device, the surface roughness should be controlled to be 20 nm or less as a mean-square value by a method for reducing the particle size or a method of polishing after film formation.

The thickness of the anode 13 is selected to be generally about 5 nm to 1 µm, preferably about 10 nm to 1 µm, further preferably about 10 nm to 500 nm, especially preferably about 10 nm to 300 nm, desirably 10 nm to 200 nmdepending on the material that is used.

The sheet electric resistance of the anode 13 is set to preferably several hundreds of Ω/square, more preferably about 5 to 50 Ω/square.

### [Organic Electroluminescence Layer 14]

The organic electroluminescence layer 14 may be a well known layer structure or layer of a well known material in a well known organic electroluminescence device, and can be manufactured by a well known manufacturing method.

The organic electroluminescence layer 14 should realize at least the following capabilities, and may have a layered structure with each layer having any of the capabilities, or may have a single layer to realize the capabilities described below.
- Electron injection capability
   capability of injection of an electron from an electrode (cathode) (electron injection characteristics).
- Positive hole injection capability
   capability of inj ection of a positive hole from an electrode (anode) (positive hole injection characteristics).
- Carrier transport capability
   capability of transporting at least one of an electron and a positive hole (carrier carriage characteristics).
   The capability of transporting an electron is called an electron transport capability (electron transport characteristics) , and the capability of transporting a positive hole is called a positive hole transport capability (positive hole transport characteristics).
- Light emission capability
   capability of rebinding an injected/transported electron and carrier together to generate an excitor (entry into an excited state), and emitting light when returning to a ground state.

For example, layers maybe provided in the order of a positive hole transport layer, a light emission layer and an electron transport layer from the anode side to constitute the organic electroluminescence layer 14.

The positive transport layer is a layer transporting the positive hole from the anode to the light emission layer. A material for formation of the positive hole transport layer may be selected from, for example, low molecular materials such as metal phthalocyanines and nonmetal phthalocyanines such as copper phthalocyanine and tetra (t-butyl) copper phthalocyanine, quinacridone compounds, aromatic amines such as 1,1-bis(4-di-p-triaminophenyl)cyclohexane, N,N'-diphenyl-N,N'-bis(3-methylphenyl)-1,1'-biphenyl-4,4'-d iamine and N,N'-di(1-naphtyl)-N,N'-diphenyl-1,1'-biphenyl-4,4'-diamine, polymer materials such as polythiophene and polyaniline, polythiophene oligomer materials, and other existing positive transport materials.

The light emission layer is a layer rebinding together the positive hole transported from the anode side and the electrode transported from the cathode side to enter into an excited state, and emitting light when returning to the ground state from the excited state. As a material for the light emission layer, a fluorescent material or phosphorescent material may be employed. Furthermore, a dopant (fluorescent material or phosphorescent material) may be incorporated in the host material.

As materials for formation of the light emission layer, materials may be selected from, for example, low-molecular materials such as 9,10-diarylanthracene derivatives, pyrene derivatives, colonene derivatives, perylene derivatives, lubrene derivatives, 1,1,4,4-tetraphenylbutadiene, tris(8-quinolinolate) aluminum complexes, tris(4-methyl-8-quinolinolate) aluminum complexes, bis(8-quinolinolate) zinc complexes, tris(4-methyl-5-trifluoromethyl-8-quinolinolate) aluminum complexes, tris(4-methyl-5-cyano-8-quinolinolate)aluminum complexes, bis(2-methyl-5-trifluoromethyl-8-quinolinolate) [4-(4-cyanophenyl)phenolate] aluminum complexes, bis(2-methyl-5-cyano-8-quinolinolate) [4-(4-cyanophenyl)phenolate] aluminum complexes, tris(8-quinolinolate) scandium complexes, bis[8-(para-tosyl)aminoquinoline] zinc complexes and cadmium complexes, 1,2,3,4-tetraphenyl cyclopentadiene, pentaphenyl cyclopentadiene, poly-2,5-diheptyloxy-para-phenylene vinylene, coumarine based fluorescent materials, perylene based fluorescent materials; pyran based fluorescent materials, anthrone based fluorescent materials, porphin based fluorescent materials, quinacridone based fluorescent materials, N,N'-dialkyl substituted quinacridone based fluorescent materials, naphthalimide based fluorescent materials and N,N'-diaryl substituted pyrrolopyrrole based fluorescent materials, polymer materials such as polyfluorene, polyparaphenylene vinylene and polythiophene, and other existing light emission materials may be used. If a host/guest type configuration is employed, a host and guest (dopant) may be selected from those materials as appropriate.

The electron transport layer is a layer transporting an electron from the cathode to the light emission layer. Materials for formation of the electron transport layer include, for example, 2-(4-biphinylyl)-5-(4-t-butylphenyl)-1,3,4-oxadiazole, 2,5-bis(1-naphtyl)-1,3-4-oxadiazole and oxadiazole derivatives, bis(10-hydroxybenzo[h]quinolinolate) beryllium complexes and triazole compounds.

The organic electroluminescence layer 14 can be provided with layers that can be employed in a well known organic electroluminescence layer, such as a buffer layer, a positive hole block layer, an electron injection layer and a positive hole injection layer, as a matter of course. These layers may be provided by a well known method using well known materials.

### [Cathode 15]

The cathode 15 is an electrode injecting electrodes into the organic electroluminescence layer 14 (electron transport layer in the configuration described above), and metals and alloys, electrically conductive compounds and mixtures thereof having a work function, for example, less than 4.5 eV, generally equal to or less than 4.0 eV, typically equal to or less than 3.7 eV or less are employed as electrode materials for improving electron injection efficiency.

The electrode materials described above include, for example, lithium, sodium, magnesium, gold, silver, copper, aluminum, indium, calcium, tin, ruthenium, titanium, manganese, chromium, yttrium, aluminum-calcium alloys, aluminum-lithium alloys, aluminum-magnesium alloys, magnesium-silver alloys, magnesium-indium alloys, lithium-indium alloys, sodium-potassium alloys, magnesium/copper mixtures and aluminum/aluminum oxide mixtures. Furthermore, a material capable of being employed as a material that is used in the anode may also be used.

If the cathode 15 is provided on the light extraction side from the light emission layer, generally, it is set so that the transmittance for extracted light is greater than 10% and for example, an electrode formedbystackingatransparent conductive oxide on a very thin magnesium-silver alloy, or the like, is employed. Furthermore, for preventing the light emission layer and the like from being damaged by plasma when the conductive oxide is sputtered, in the cathode, a buffer layer having copper phthalocyanine or he like should be provided between the cathode 15 and the organic luminescence layer 14.

If the cathode 15 is used as a light reflecting electrode, a material having a capability of reflecting the light to be extracted outside is appropriately selected from the materials described above, and a metal, alloy or metal compound is generally selected.

The cathode 15 may be formed by one of the above materials alone, or may be formed by a plurality of materials. For example, if 5 to 10% of silver or copper is added to magnesium, oxidation of the cathode 15 can be prevented, and adhesion of the cathode 15 to the organic electroluminescence layer 14 is enhanced.

Furthermore, the cathode 15 may be a multilayered structure composed of multiple layers of the same composition or different compositions. For example, the structure described below can be used.
- For preventing oxidation of the cathode 15, a passivation film made of corrosive metal is provided in an area of the cathode 15 which does not contact the organic electroluminescence layer 14.

As a material for formation of the passivation film, for example, silver or aluminum is suitably used. • For reducing the work function of the cathode 15, an oxide, fluoride or metal compound having a reduced work function is inserted into an interface area between the cathode 15 and the organic electroluminescence layer 14.

For example, aluminum is used as a material for the cathode 15, and lithium fluoride or lithium oxide is inserted into the interface area.

The cathode 15 may be formed by a well known thin film formation method such as a vacuum vapor deposition method, sputtering method, ionization deposition method, ion plating method or electron beam deposition method.

The thickness is set to generally about 5 nm to 1 µm, preferably about 5 nm to 1000 nm, especially preferably about 10 nm to 500 nm, desirably 50 nm to 200 nmdepending on the electrode material that is used.

The sheet electric resistance of the cathode 15 is preferably set to several hundreds of Ω/square.

### [Substrate 12]

The substrate 12 is generally a plate member supporting the organic electroluminescence device 11. The organic electroluminescence device 11 is generally fabricated as an organic EL device supported by the substrate 12 because each constituent layer is very thin.

The substrate 12 is preferably has plane smoothness because it is a member on which the organic electroluminescence device 11 is stacked.

Furthermore, if the substrate 12 is placed on the light extraction side from the organic electroluminescence layer 14, it is transparent to extracted light.

As the substrate 12, a well known material may be used as long as it has the performance described above. Generally, glass substrates, silicon substrates, ceramic substrates such as quartz substrates and plastic substrates are selected. Furthermore, metal substrates and substrates with metal foils formed on supports are also used. Moreover, a substrate composed of a composite sheet having combined two or more of the same or different substrates may also be used.

### <Operations of Gas Sensor>

The organic electroluminescence device 11 has a terminal portion (not shown) of the anode 13 and a terminal portion (not shown) of the cathode 15 connected to a power source. A predetermined voltage is applied between both electrodes (anode 13 and cathode 15) from the power source, and the organic electroluminescence layer 14 has a positive hole injected thereinto from the anode 13 and an electrode injected thereinto from the cathode 15, recombines the positive hole and the electrode together to enter into an excited state, and emits light when returning to the ground state.

However, areas in which a dark spot is generated in the organic electroluminescence layer 14 does not emit light. This is because in the areas in which a dark spot is generated, any or all of electrodes (anode 13 and cathode 15) and the organic electroluminescence layer 14 are degenerated, and therefore carriers (positive hole/electrode) cannot be injected or transported, or recombined, or the layer cannot enter into an exited state.

Thus, by using the gas detection method described previously, gas in the ambient atmosphere can be detected.

Effects of the gas sensor and gas detection method according to this embodiment will now be listed. The operations/effects described previously can also be obtained as a matter of course.

### <Effects of Detection Method and Sensor>

- A new gas detection method and a new gas sensor can be provided.
- A very sensitive gas detection method and gas sensor can be provided.

This is because the organic electroluminescence device and the inorganic electroluminescence device react with a very small amount of gas to generate a dark spot.
- The sensor employing the organic electroluminescence device can reduce voltage applied to the device compared with a sensor employing an inorganic electroluminescence device.
- Existence of gas in the ambient atmosphere can be visually checked.

This is because a gas detection method and gas sensor according to this embodiment detects gas in the ambient atmosphere based on a dark spot.

It should be apparent to those skilled in the art that the present invention may be embodied in many other specific forms without departing from the spirit or scope of the invention. Particularly, it should be understood that the invention may be embodied in the following forms.

Furthermore, the following alteration examples may also be implemented in combination as long as they do not contradict one another.

As shown in FIG. 2, an area protected from gas in the ambient atmosphere, and an area 21a not protected from gas in the ambient atmosphere may be provided in the organic electroluminescence device 11.

If this configuration is employed, the above protected area should be protected by the substrate 12 and a protective member 20 comprising at least one of a passivation film and a sealing can. That is, the electroluminescence device should be designed to have an area contacting the substrate 12, an area protected by the protective member 20, and an area not protected from water and gas.

If the electroluminescence device is configured in this way, water or gas in the ambient atmosphere contacts and enters the organic electroluminescence device 11 mainly from the non-protected area 21a, and therefore the growth rate of a dark spot is reduced compared with an organic electroluminescence device that is not protected at all, and an organic electroluminescence device that is protected only by the substrate. The number of dark spots generated is also reduced. Thus, the above sensor can function for a longer time period.

Furthermore, in this configuration, the area 21a not protected from gas may also be protected by a material permeable to the gas to be detected. If protection is provided in this way, the lifetime of the sensor can be prolonged. Furthermore, gas other than the detection object is hard to contact/enter the organic electroluminescence device 11, resulting in higher gas detection accuracy for the sensor.

The passivation film is a protective layer (sealing layer) provided on the side opposite to the substrate for preventing the organic electroluminescence device 11 from contacting oxygen. Materials to be used for the passivation film may include, for example, organic polymer materials, inorganic materials and photo-curable resins, and the material to be used for the protective layer may be used alone, or in combination of two or more materials. The protective layer may be a single-layer structure or multilayered structure. The thickness of the passivation film is not limited as long as water and gas from outside can be blocked.

Examples of organic polymer materials may include fluorine based resins such as chlorotrifluoroethylene polymers, dichlorodifluoroethylene polymers, and copolymers of chlorotrifluoroethylene polymersand dichlorodifluoroethylene polymers, acryl based resins such as polymethyl methacrylates and polyacrylates, epoxy resins, silicon resins, epoxysilicone resins, polystyrene resins, polyester resins, polycarbonate resins, polyamide resins, polyimide resins, polyamideimide resins, polyparaxylene resins, polyethylene resins and polyphenylene oxide resins.

Inorganic materials may include polysilazane, diamond thin films, amorphous silica, electrically resistant glass, metal oxides, metal nitrides, metal carbides and metal sulfates.

The sealing can is a member provided composed of a sealing member such as a sealing plate or sealing container provided on the side opposite to the substrate 12 for blocking water and oxygen from outside. The sealing can may be placed only on the electrode side on the backside (opposite to the substrate 12), or may be situated to cover the entire organic electroluminescence device 11. The shape, size, thickness and the like of the sealing member are not specifically limited as long as it can seal the organic electroluminescence device 11 and block air from outside. As materials to be used for the sealingmember, glass, stainless steel, metals (aluminum, etc.), plastics (polychlorotrifluoroethylene, polyester, polycarbonate, etc.), ceramic and the like may be used.

When the sealing member is placed in the organic electroluminescence device 11, a sealing agent (adhesive) may be used as appropriate. If the entire organic electroluminescence device 11 is coveredwith the sealingmember, sealing members may be heat-sealed without using the sealing agent. As the sealing agent, ultraviolet-curable resins, thermoset resins, two-pack curable resins and the like can be used.

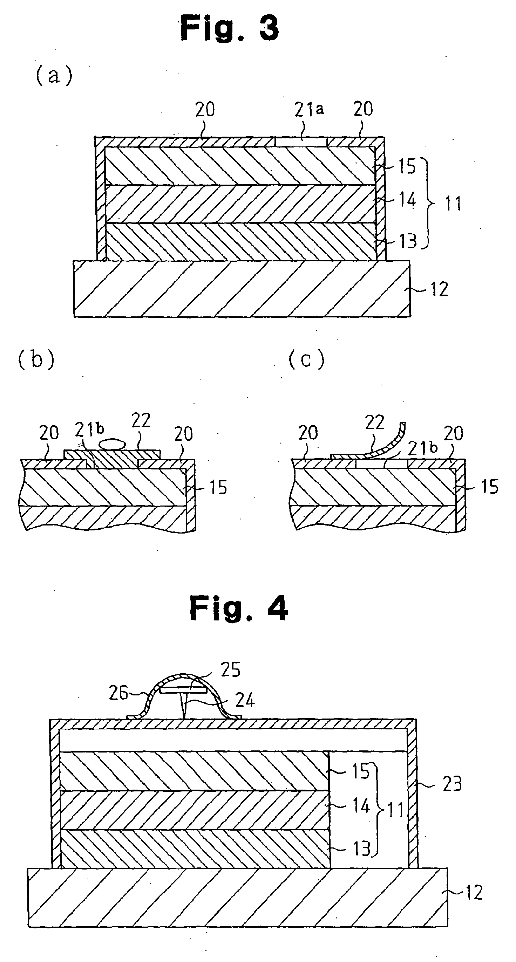

As shown in FIG. 3 (a), an area permanently protected from gas in the ambient atmosphere and an area 21b capable of switching between protected and non-protected states may be provided in the organic electroluminescence device 11.

If this configuration is employed, the above permanently protected area should be protected by the substrate 12 and the protective member 20 comprising at least one of a passivation film and a sealing can. That is, the permanently protected area in the organic electroluminescence device 11 is comprised of an area contacting the substrate 12 and an area protected by the protective member 20.

The area 21b capable of switching between protected and non-protected states should be such that the organic electroluminescence device 11 is protected from gas by a cover member 22 in an initial state, and is in a non-protected state with part or all of the cover member 22 having been removed in a usage state.

The cover member 22 is preferably constituted by a material protecting the organic electroluminescence device 11 from gas in the ambient atmosphere, e.g., a material for formation of the passivation film or a material for formation of the sealing can.

In the initial state (non-usage state), the organic electroluminescence devise 11 is protected from gas in the ambient atmosphere by the substrate 12, the protective member 20 and the cover member 22.

In the usage stage, the cover member 22 is removed from the area 21b capable of switching between protected and non-protected states so that water and gas in the ambient atmosphere can contact the organic electroluminescence device 11 through the area 21b.

Furthermore, in the initial state, storage of the gas sensor in a specified place is not required.

Furthermore, the shape of the cover member 22 may be any shape as long as it can realize the above capabilities.

For example, as shown in FIG. 3(B), the cover member 22 may have a shape such that part of the cover member 22 is accommodated in part of the protective member 20 that has been cut off, and may be bonded to the protective member 20 with an adhesive or the like in the initial state, and removed from the protective member 20 in the usage state.

As shown in FIG. 3(C), the cover member 22 may be a seal member, and may be bonded to the protective member 20 with an adhesive or the like in the initial state, and partially or wholly removed from the protective member 20 in the usage state.

The organic electroluminescence device may be protected by at least the substrate and a protective layer (partially permeable layer) permeable to molecules having sizes equal to or smaller than a specified size. More preferably, the partially permeable layer is a passivation film and/or sealing can, and is permeable to molecules equal to or smaller than in size molecules of gas that are detected by the sensor.

The partially permeable layer may cover the organic electroluminescence device 11, for example, with the passivation film and sealing can having a thickness allowing water and gas to permeate.

Furthermore, the organic electroluminescence device 11 may be covered with a material permeable to at least water and gas to be detected by the sensor.

The organic electroluminescence device may be protected by the substrate, and at least one of the passivation film and sealing can, with a through-hole bored in part of the passivation film or sealing can.

If this configuration is employed, a member such as a needle for boring a though-hole in part of the passivation filmor sealing can should be further provided in the sensor.

For example, as shown in FIG. 4, the organic electroluminescence device 11 may be protected by the substrate 12 and a sealing can 23, and a through-hole making member constituted by a needle 24 for boring a though-hole in the sealing can, a press section 25 connected to the needle 24 and intended for pressing down the needle 24, and a cover 26 for holding the press section 25 at a predetermined position in the sealing can 23 may be provided outside the sealing can 23. The cover 26 is configured so that it can be partially or wholly removed from the sealing can 23, or so at least the water and gas to be detected by the sensor can pass through the cover 26.

In this configuration, the organic electroluminescence device 11 is protected by the sealing can 23 and the substrate 12 in the initial state.

In the usage state, the press section 25 is pressed from above the cover 26 toward the sealing can 23 side, and the needle 24 bores a through-hole in the sealing can 23. Gas enter the sealing can 23 through the through-hole with the cover 26 removed from the sealing can 23, or gas passes through the cover 26 with the cover 26 not removed from the sealing can 23, and enters the sealing can 23 through the through-hole. Consequently, a dark spot is formed in the organic electroluminescence device 11, thus making it possible to detect gas.

Furthermore, in the initial state, storage of the gas sensor in a specified place is not required.

At least one of the electrodes (anode 13 and cathode 15) should contain at least one element selected from alkali metals and alkali earth metals. This is because an electrode containing these metals is susceptible to degeneration such as oxidization and therefore tends to generate a dark spot and as a result, a very sensitive sensor can be provided.

An inert gas may be enclosed in the passivation film or sealing can. An inert gas refers to a gas that does not react with the organic electroluminescence device 11, and rare gas such as helium and argon, or nitrogen gas may be employed. If this configuration is employed, a dark spot is difficult to be generated in the organic electroluminescence device 11 in the initial state, i.e., non-usage state, thus making it possible to prolong the lifetime of the sensor. Furthermore, in the initial state, storage of the gas sensor in a specified place is not required.

A plurality of devices may be arranged in a matrix form rather than fully illuminating the organic electroluminescence device. In this case, the organic electroluminescence device may be used to display an image using the passive matrix control method or active matrix control method.

By setting as appropriate the size of an area (though-hole, etc.) exposing the organic electroluminescence device to gas in the ambient atmosphere, the thickness of the passivation film and the like, the sensitivity of the sensor can be adjusted, and the sensor usable time period can be freely set.

### «Gas Detecting Apparatus»

A gas detecting apparatus according to this embodiment will now be described. This detecting apparatus is characterized by comprising as a gas detection section the gas sensor described above, or a sensor with the above sensor altered as appropriate as described previously, and detecting gas in the ambient atmosphere using the gas detection method described previously. First, a first gas detecting apparatus will be described.

### <Gas Detecting Apparatus of First Embodiment>

A gas detecting apparatus according to the first embodiment is characterized by comprising as a gas detection section the gas sensor described above, or a sensor with the above sensor altered as appropriate as described previously, and detecting gas by a change in luminance when a predetermined voltage is continuously applied to the organic electroluminescence device. Furthermore, the concentration of gas maybe detected. Of course, both may be detected.

The luminance of the organic electroluminescence device in which a dark spot is generated decreases in inverse proportion to the ratio of the total area of dark spots to the luminance area of the device, compared with a device in which no dark spots are generated. Thus, by observing a change in luminance when a predetermined voltage is continuously applied to the device, the existence of gas in the ambient atmosphere can be determined (detected) to be present.

As the simplest configuration in the gas detecting apparatus of the first embodiment, it is comprised of the above gas sensor, a power source connected to electrodes of the sensor and applying a certain voltage to the sensor. A change in luminance is visually checked. Consequently, the user can see whether gas exists in the ambient atmosphere or not by merely checking brightness of the organic electroluminescence device 11. Furthermore, the concentration of water or gas can be determined.

Furthermore, if this configuration is employed, a display apparatus (illumination apparatus) configured in the same manner as the above gas detecting apparatus except that the organic electroluminescence device is fully sealed should be fabricated and placed at a position so that the organic electroluminescence device in this apparatus can be compared with the organic electroluminescence device 11 in the above gas detecting apparatus.

Consequently, the display apparatus retaining brightness in the initial state can be visually compared with the detecting apparatus having a reduced luminance due to generation of a dark spot by gas in the ambient atmosphere, thus making it possible to determine more easily whether the luminance of the detecting apparatus has decreased or not.

The luminance of the organic electroluminescence device decreases over time. However, by arranging the organic electroluminescence device of the display apparatus and the organic electroluminescence device of the detecting apparatus side-by-side as described above, whether the decrease in luminance of the organic electroluminescence device of the detecting apparatus results from a change with time or generation of a dark spot is easily determined.

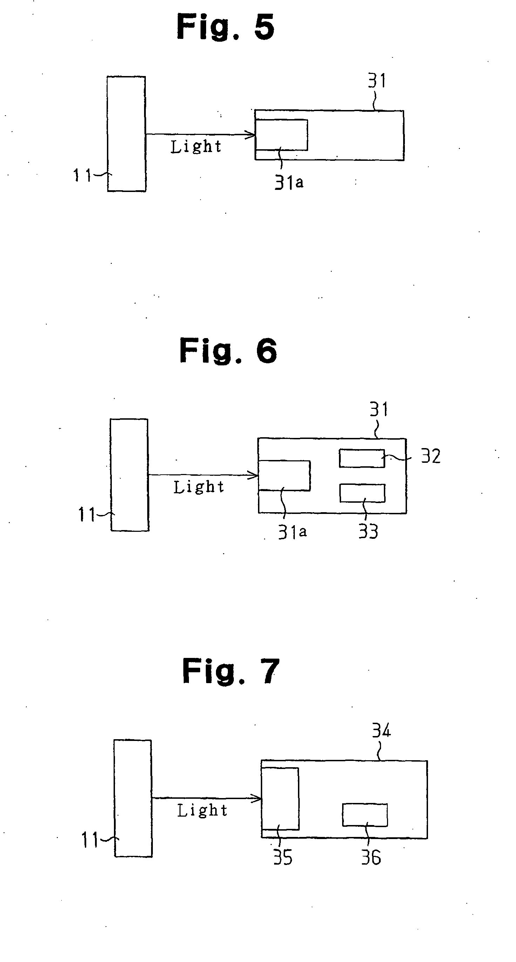

As shown in FIG. 5, the above detecting apparatus may further comprise a luminance measuring apparatus (luminance detection section) 31 as a luminance measurement section measuring the luminance of the organic electroluminescence device 11, with a luminance detection and measurement section 31a measuring the luminance of the organic electroluminescence device 11. Consequently, a decrease in luminance of light emitted from the organic electroluminescence device 11 can be determined more accurately than a visual determination.

Furthermore, even if this configuration is employed, the organic electroluminescence device of the display apparatus and the organic electroluminescence device 11 of the detecting apparatus should be arranged side-by-side as described above, and the luminance of the device of the display apparatus should be measured. By detecting a difference in luminance between both the devices, whether the decrease in luminance of the organic electroluminescence device 11 of the detecting apparatus results from a change with time or existence of gas in the ambient atmosphere canbe determined. In the case of this configuration, a determination section making the determination is preferably provided.

Furthermore, an effect equivalent to that described above can be obtained by previously measuring light emission characteristics (result of change in characteristics associated with increasing time) of the organic electroluminescence device of the above display apparatus, and comparing the result of the measurement with the luminance of the organic electroluminescence device 11 of the above detecting apparatus. If this configuration is employed, a storage section 32 storing the above light emission characteristics and a determination section 33 making the determination as described above are preferably provided as shown in FIG. 6. The determination section 33 is constituted by a microcomputer. Furthermore, in this configuration, it is not necessary to provide the above display apparatus.

As described previously, there is a definite relation between the concentration of gas in the ambient atmosphere and the total area of dark spots when the gas sensor is placed in the atmosphere. Furthermore, there is also a definite relation between the area of dark spots relative to the display area of the organic electroluminescence device and the luminance of the device. Thus, by measuring the luminance of the organic electroluminescence device 11, the concentration of gas in the ambient atmosphere can be detected. That is, by measuring the decreasing rate in luminance, the generation rate of dark spots is detected, whereby the concentration of gas in the ambient atmosphere can be determined.

Thus, if a luminance rate decrease determination section determining the decreasing rate in luminance is added to the above configuration, the concentration of water or gas in the ambient atmosphere can be easily detected.

### <Gas Detecting Apparatus of Second Embodiment>

The gas detecting apparatus according to the second embodiment is characterized by measuring the area of dark spots in the organic electroluminescence device to detect gas. Furthermore, the concentration of gas or the like may be detected. Of course, both may be detected.

This detecting apparatus is comprised of at least the organic electroluminescence device 11 and a power source connected to electrodes of the device. By checking any of the items described below, it can be determined that the water or gas to be detected is present in the ambient atmosphere.
- Whether a dark spot is generated or not is visually checked if an organic electroluminescence device 11 free from a dark spot is used.
- Whether the number of dark spots has increased and/or the total area of dark spots has enlarged is checked if an organic electroluminescence device 11 having dark spots is used.

Furthermore, by calculating the increasing rate of the total area of dark spots during a predetermined time period, the concentration of gas in the ambient atmosphere can be determined. As apparent from finding (C) described above, there is a predetermined matching relation between the increasing rate of the total area of dark spots and the concentration of gas in the ambient atmosphere, and therefore a mathematical expression, matching table or the like indicating the relationship between the former and the latter can be created. Thus, by substituting the above rate into the above mathematical expression or the like, the concentration of water or the like in the ambient atmosphere can be determined.

Furthermore, for automation of the determination and calculation described above, an image analyzing apparatus (measurement section) 34 image-analyzing the display area of the organic electroluminescence device 11 should be provided as shown in FIG. 7. The image analyzing apparatus 34 comprises at least an imaging section 35 comprised of a CCD or the like forming an image of the display area of the organic electroluminescence device 11, and an area calculation section 36 making a determination based on dark spots in the display area from the image formed by the imaging section 35 and calculating the area of the dark spots. The area calculation section 36 is constituted by a microcomputer. By employing this configuration, automatic calculations can be made of whether or not gas is present in the ambient atmosphere, and the concentration thereof.

### <Gas Detecting Apparatus of Third Embodiment>

The gas detecting apparatus of the third embodiment is characterized by detecting gas by a change in voltage value required for illuminating the organic electroluminescence device at a predetermined luminance. Furthermore, the concentration of gas may be detected. Of course, both may be detected.

The luminance of the organic electroluminescence device 11 decreases if a dark spot is generated. Thus, for maintaining the luminance before of the initial state, the luminance of an area free from a dark spot must be increased and for this purpose, the magnitude of a voltage to be applied to the device must be increased.

Focusing on the above respects, the detecting apparatus of the third embodiment detects the presence/absence of gas in the ambient atmosphere, and the concentration of gas.

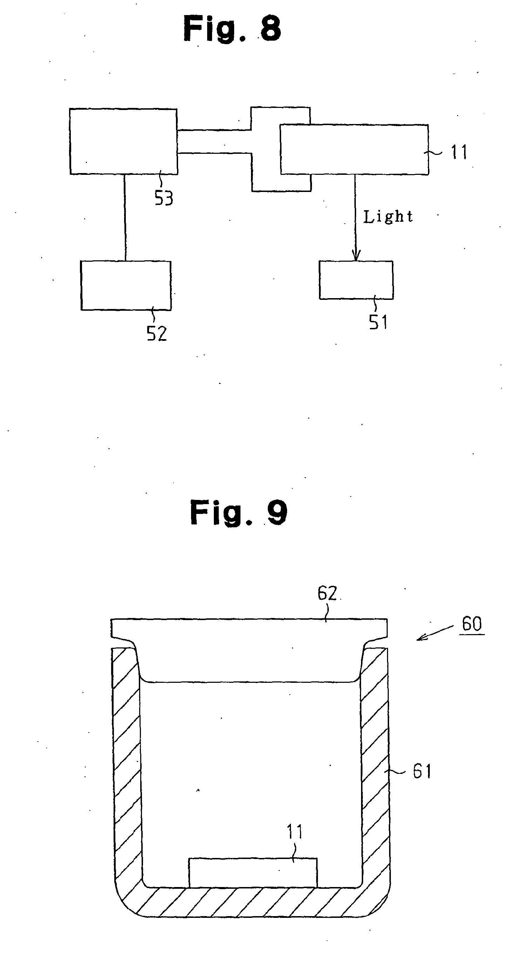

Thus, as shown in FIG. 8, if the third detecting apparatus comprises at least a luminance measuring apparatus (luminance measurement section) 51, a determination apparatus (determination section) 52 and a power source section 53, the above processing can be automated. The luminance measuring apparatus 51 measures the luminance of the organic electroluminescence device 11. The determination apparatus 52 determines the magnitude of a voltage to be applied to the organic electroluminescence device 11 based on the result of measurement by the luminance measuring apparatus 51. The power source section 53 applies a voltage based on the result of determination by the determination apparatus 52 to the organic electroluminescence device 11.

Furthermore, in the gas detecting apparatus of the second and third embodiments, light emission characteristics (characteristics in change with time) of the organic electroluminescence device fully protected from water and gas are preferably considered before detection is performed as in the case of the gas detecting apparatus of the first embodiment.

### <Gas Detecting Apparatus of Fourth Embodiment>

The gas detecting apparatus according to the fourth embodiment is characterized by detecting gas based on a change in voltage value in the organic electroluminescence device 11 when a predetermined voltage is applied to the device.

For example, when a certain current is continuously passed through the organic electroluminescence device 11, the voltage in the device arises if dark spots are generated. In this way, the detecting apparatus according to the fourth embodiment detects the presence/absence of gas and the concentration thereof in the ambient atmosphere by measuring generation of dark spots, and the increasing rate of the total area of dark spots taking advantage of the change in voltage characteristics due to generation of dark spots.

For example, a detecting apparatus according to the fourth embodiment should only comprise at least a power source section passing a certain current through the organic electroluminescence device 11, and a voltage measurement section (measurement section) measuring a voltage in the organic electroluminescence device 11.

If the voltage arises, it can be determined that a dark spot is generated, and therefore it can be determined that water or gas exists in the ambient atmosphere.

Furthermore, since the arising rate of voltage varies depending on the total area of dark spots, the increasing rate of the total area of dark spots can be calculated from the degree of drop in voltage to calculate the concentration of water or gas in the ambient atmosphere.

Furthermore, for automation of the above processing, the detecting apparatus should further comprise a determination apparatus (determination section) determining whether the voltage value in the organic electroluminescence device 11 is a predetermined value or not, and make the determination apparatus perform the above calculation.

Furthermore, since the organic electroluminescence device has characteristics such that if a certain current is passed through the device, the voltage in the device increases, more accurate detection can be performed if such characteristics (voltage characteristics and current characteristics associated with increasing time) are considered before the above calculation is performed.

Furthermore, a detecting apparatus according to the fourth embodiment is not required to measure a luminance and determine the size and number of dark spots, and therefore the organic electroluminescence device 11 configured to emit no light to the outside may also be employed. For example, an anode and a cathode may be each constituted by a metal electrode. Thus, a very high degree of freedom can be obtained for the material and method for formation of the organic electroluminescence device 11 and the layer structure of the device.

A gas detecting apparatus according to the first to fourth embodiments can be changed into an apparatus for detecting a specific type of gas, and an apparatus for detecting various types of gases, by appropriately designing and altering the sensor as described previously. For example, the detecting apparatus can be changed into an apparatus measuring for humidity in the ambient atmosphere, or an apparatus measuring the degree of vacuum in the ambient atmosphere, or an apparatus for measuring oxygen in the ambient atmosphere.

Furthermore, a gas detecting apparatus according to the first to fourth embodiments can be changed into a new detecting apparatus by changing only the organic electroluminescence device 11.

As described above, with a detecting apparatus of this embodiment, the presence of gas can be detected visually, the concentration thereof can be detected, and more accurate detection can be performed if it is combined with the above measuring apparatuses and the like.

Now, a storage vessel for a gas sensor according to first to third embodiments will be described, and a method for storing the gas sensor according to the first to third embodiments will be described.

### «Storage Vessel of Gas Sensor»

A method for storing a gas sensor according to the first embodiment is characterized in that at least the organic electroluminescence device 11 is placed under an inert gas for the device or placed under vacuum until it is used.

This is because storage under such a state prevents generation or growth of dark spot in the organic electroluminescence device 11 in the initial state (non-usage state).

Furthermore, parts other than the organic electroluminescence device 11 may be stored under the environment described above as a matter of course.

A storage vessel for a gas sensor according to this embodiment is characterized by having a structure capable of using the technical idea of the above method for storing the gas sensor.

Specifically, as shown in FIG. 9, the above storage vessel 60 has a housing 61 as a storage section for storing at least the organic electroluminescence device 11, and the housing 61 comprises a cover 62 as a switching member for switching between isolation from and exposure to the exterior of the storage vessel 60. That is, the storage vessel 60 can contain at least the organic electroluminescence device 11 within the housing 61, and isolate the interior of the housing 61 from the ambient atmosphere by the cover 62.

Furthermore, a storage vessel according to the first embodiment is not limited to the configuration shown in FIG. 9, and can employ any housing irrespective of its shape, material, size, etc. as long as the above technical idea, i.e., action can be obtained.

Furthermore, as described previously, parts other than the organic electroluminescence device 11 may also be stored under the housing 61.

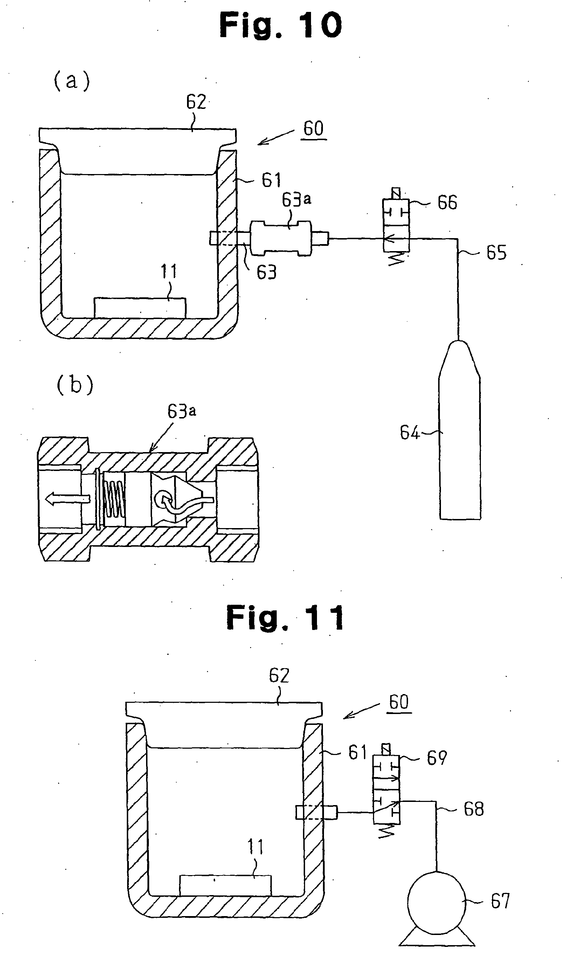

Further, this storage vessel may have any of the following configurations (I) to (IV).
(I) Configuration in which the storage vessel comprises a filling section for filling the storage section with an inert gas relative to the electroluminescence device.
   That is, the storage section can be filled with the above inert gas when the interior of the storage section is isolated from the ambient atmosphere.
(II) Configuration in which the storage vessel comprises an externally provided connection section connecting the interior of the storage section to a device for providing inert gas relative to the electroluminescence device, and the connection section comprises a mechanism which is opened when the former and the latter are connected, and isolated from the exterior of the storage section when they are not connected.
   That is, the storage vessel comprises a connection section connecting the interior of the storage section to the inert gas filling device provided externally for filling the storage section with inert gas when the interior of the storage section is isolated from the ambient atmosphere. For example, as shown in FIG. 10 (A) , the connection section 63 is connected to a filling device 64 by a pipe conduit 65. As the filling device 64, for example, a gas cylinder is used. A direction switching valve 66 is provided at some intermediate point in the pipe conduit 65, and is configured to be capable of switching between a state in which the connection section 63 and the filling device 64 can communicate with each other and a state in which they cannot communicate with each other. The connection section 63 comprises a mechanism 63a such as, for example, a valve or shutter, which allows the inert gas to pass into the storage section when the gas is flowing from the filling device 64, and cuts off (isolates) the interior of the storage section from the exterior thereof when the inert gas is not flowing. As the mechanism 63a, for example, a check valve as described in FIG. 10(B) is used.
   Thus, if this configuration is employed, the storage section can filled with the above inert gas when the electroluminescence device is stored in the storage section.
(III) Configuration in which the storage vessel comprises a suction section producing approximately a vacuum in the storage section. For example, as shown in FIG. 11, the storage section communicates with a vacuum pump 67 as the suction section through a pipe conduit 68. A directional switching valve 69 is provided at some intermediate point in the pipe conduit 68. The direction switching valve 69 is configured to be capable of switching between a state in which the housing 61 can communicate with the vacuum pump 67 and a state in which the housing 61 can communicate with the ambient atmosphere. In this configuration, if the vacuum pump 67 is driven with the directional switching valve 69 switched to the state in which the housing 61 can communicate with the vacuum pump 67, a vacuum is produced in the housing 61. Furthermore, when the cover 62 is released, the directional switching valve 69 is switched to the state in which the housing 61 communicates with the ambient atmosphere, whereby the pressure in the housing 61 becomes equal to that of the ambient atmosphere.
   If this configuration is employed, the electroluminescence device can be stored under vacuum.
(IV) Configuration in which the storage vessel comprises a connection section connecting the interior of the storage section to a suction device provided externally, and the connection section comprises a mechanism which is opened when the former and the latter are connected, and isolated from the exterior of the storage section when they are not connected.

In this configuration, the connection section comprises a mechanism, such as a valve or shutter, which can be connected to a suction device such as an aspirator or suction pump provided outside, and allows the interior of the storage section to communicate with the exterior (suction device) when being suctioned by the suction device, and cuts off (isolates) the interior of the storage vessel from the exterior when not being suctioned by the suction device in configuration (II).

Thus, if this mechanism is employed, the electroluminescence device can be stored under vacuum.

Furthermore, if the sensor is handledwith the storage vessel described above, generation of dark spots in the organic electroluminescence device 11 can be prevented until the sensor is used even if a protective section such as the passivation film or the like protecting the sensor (especially organic electroluminescence device 11) from water and gas is not provided. Thus, the organic electroluminescence device 11 may not be protected with the passivation film or sealing can, or may be only provided with a protective layer using a material having poor water and gas barrier properties.

A storage vessel of the gas detecting apparatus according to this embodiment will now be described along with the gas detection method according to this embodiment.

### «Storage Vessel of Gas Detecting Apparatus»

A method for storing the gas detecting apparatus according to this embodiment is characterized in that at least the electroluminescence device is placed under inert gas for the device or under vacuum until it is used.

This is because storage under such a state prevents generation or growth of dark spots in the organic electroluminescence device 11 in the initial state (non-usage state).

Furthermore, parts other than the organic electroluminescence device 11 may be stored under the above environment as a matter of course.

A storage vessel for the gas detecting apparatus according to this embodiment is characterized by having a structure capable of using the technical idea of the method for storing the above gas detecting apparatus.

For example, the above storage vessel is characterized by comprising a storage section for storing at least the electroluminescence device, the storage section comprising a section of isolation from exposure to the exterior of the storage vessel. That is, the storage vessel can store at least the electroluminescence device in the storage section, and isolate the interior of the storage section from the ambient atmosphere.

Furthermore, a storage vessel according to this embodiment is not limited to the configuration described above, but may employ any housing irrespective of its shape, material, size, etc., as long as the above technical idea, i.e., action can be obtained.

Furthermore, as described previously, parts other than the organic electroluminescence device 11 may be stored in the storage section.

Further, this storage vessel may have any of the following configurations (V) to (VIII).
(V) Configuration in which the storage vessel comprises a filling section for filling the storage section with inert gas relative to the electroluminescence device.
   By employing this configuration, at least the electroluminescence device can be stored under inert gas.
(VI) Configuration in which the storage vessel comprises an externally provided connection section connecting the interior of the storage section to a device for providing inert gas relative to the electroluminescence device, and the connection section comprises a mechanism which is opened when the former and the latter are connected, and isolated from the exterior of the storage section when they are not connected.
   This configuration is equivalent to the configuration (II) described above, and allows at least the electroluminescence device to be stored under inert gas.
(VII) Configuration in which the storage vessel comprises a suction section producing approximately a vacuum in the storage section.
   By employing this configuration, at least the electroluminescence device can be stored under vacuum.
(VIII) Configuration in which the storage vessel comprises a connection section connecting the interior of the storage section to a suction device provided externally, and the connection section comprises a mechanism which is open when the former and the latter are connected, and isolated from the exterior of the storage section when they are not connected.

This configuration is equivalent to the configuration (IV) described above, and allows at least the electroluminescence device to be stored under vacuum.

Therefore, the present examples and embodiments are to be considered as illustrative and not restrictive and the invention is not to be limited to the details given herein, but may be modified within the scope and equivalence of the appended claims.

A method and device for detecting gas in the ambient atmosphere and/or the concentration of gas in the ambient atmosphere by providing an electroluminescence device. The detection is performed based on the presence of a dark spot in the electroluminescence device, which is caused by exposure of the electroluminescence device to gas in the ambient atmosphere.

## Claims

1. A method for detecting the presence of a gas in an ambient atmosphere which generates a dark spot in an electroluminescence device when the gas is in contact with the electroluminescence device **characterized by** the method comprising:
exposing an electroluminescence device to the ambient atmosphere;
detecting generation of the dark spot; and
determining whether the gas is present in accordance with the presence of the dark spot.

2. The method according to claim 1 **characterized by** the electroluminescence device including an anode and a cathode stacked with an electroluminescence layer therebetween and the dark spot generated through reduction or oxidation of at least one of the anode, cathode and the electroluminescence layer.

3. The method according to claim 1 or 2 **characterized by** said electroluminescence device being an organic electroluminescence device.

4. A method for detecting the presence of a gas in an ambient atmosphere which generates a dark spot having an area in an electroluminescence device when the gas is in contact with the electroluminescence device **characterized by** the method comprising:
exposing an electroluminescence device to the ambient atmosphere;
measuring the total area of the dark spot that results; and
determining the presence of the gas according to increase of the total area of the dark spot after said exposing the electroluminescence device to an ambient atmosphere.

5. The method according to claim 4 **characterized by** the electroluminescence device including an anode and a cathode stacked with an electroluminescence layer therebetween and the dark spot generated through reduction or oxidation of at least one of the anode, cathode and the electroluminescence layer.

6. The method according to claim 4 or 5 **characterized by** said electroluminescence device being an organic electroluminescence device.

7. A method for detecting the concentration of a gas in an ambient atmosphere which generates a dark spot having an area in an electroluminescence device when the gas is in contact with the electroluminescence device **characterized by** the method comprising:
exposing an electroluminescence device to the ambient atmosphere;
measuring the increasing rate of the total area of the dark spot that results; and
determining the concentration of the gas in accordance with the increasing rate of the total area of the dark spot.

8. The method according to claim 7 **characterized by** said measuring the increasing rate of the total area of the dark spot comprising measuring the decreasing rate of luminance of the electroluminescence device in a state in which a constant voltage is applied to the electroluminescence device.

9. The method according to claim 7 **characterized by** said measuring the increasing rate of the total area of the dark spot comprising measuring the increasing rate of a voltage that is applied to the electroluminescence device in a state in which luminance obtained from the electroluminescence device is constant.

10. The method according to any one of claims 7 to 9 **characterized by** the electroluminescence device including an anode and a cathode stacked with an electroluminescence layer therebetween and the dark spot generated through reduction or oxidation of at least one of the anode, cathode and the electroluminescence layer.

11. The method according to any one of claims 7 to 10 **characterized by** said electroluminescence device being an organic electroluminescence device.

12. A gas sensor for detecting the presence of a gas, the gas sensor **characterized by** comprising an electroluminescence device in which a dark spot forms in the electroluminescence device when exposed to the gas, and presence of the gas contained in an ambient atmosphere detected by exposing the electroluminescence device to the ambient atmosphere and detecting the formation of the dark spot.

13. The gas sensor according to claim 12 **characterized by** said electroluminescence device including a first portion that is permanently sealed from the atmosphere and a second portion that is switched between protected and non-protected states.

14. The gas sensor according to claim 13 **characterized by** the first portion protected from the atmosphere by providing at least a substrate and at least one of a passivation film and sealing can to cover the electroluminescence device.

15. The gas sensor according to claim 13 or 14 **characterized by** the second portion initially protected by a cover member and said cover member being at least partially removed in the non-protected state.

16. The gas sensor according to any one of claims 12 to 15 **characterized by** said electroluminescence device protected at least by a substrate and one of a passivation film or sealing can and said sensor exposed to the ambient atmosphere by providing a through-hole in part of said passivation film or the sealing can.

17. The gas sensor according to claim 16 **characterized by** said sensor further comprising a member for providing a through-hole in part of said passivation film or sealing can.

18. The gas sensor according to any one of claims 12 to 17 **characterized by** said electroluminescence device having a structure including an electroluminescence layer and a pair of electrodes with the electroluminescence layer held between the pair of electrodes and said gas reducing or oxidizing at least one of said electrodes and the electroluminescence layer.

19. The gas sensor according to any one of claims 12 to 18 **characterized by** said electroluminescence device being an organic electroluminescence device.

20. A gas sensor for detecting the presence of a gas, **characterized by** the gas sensor comprising an electroluminescence device in which a dark spot having an area forms in the electroluminescence device when exposed to the gas, and presence of the gas contained in an ambient atmosphere being detected by exposing the electroluminescence device to the ambient atmosphere and measuring increase of the area of the dark spot.

21. The gas sensor according to claim 20 **characterized by** said electroluminescence device including a first portion that is permanently sealed from the atmosphere and a second portion that is switched between protected and non-protected states.

22. The gas sensor according to claim 21 **characterized by** the first portion protected from the atmosphere by providing at least a substrate and at least one of a passivation film and sealing can to cover the electroluminescence device.

23. The gas sensor according to claim 21 or 22 **characterized by** the second portion initially protected by a cover member and said cover member being at least partially removed in the non-protected state.

24. The gas sensor according to any of claims 20 to 23 **characterized by** said electroluminescence device protected at least by a substrate and one of a passivation film or sealing can and said sensor exposedto the ambient atmosphere by providing a through-hole in part of said passivation film or the sealing can.

25. The gas sensor according to claim 24 **characterized by** said sensor further comprising a member for providing a through-hole in part of said passivation film or sealing can.

26. The gas sensor according to any one of claims 20 to 25 **characterized by** said electroluminescence device having a structure including an electroluminescence layer and a pair of electrodes with the electroluminescence layer held between the pair of electrodes, and said gas reducing or oxidizing at least one of said electrodes and the electroluminescence layer.

27. The gas sensor according to any one of claims 20 to 26 **characterized by** said electroluminescence device being an organic electroluminescence device.

28. A gas sensor for detecting the concentration of a gas, the gas sensor **characterized by** comprising an electroluminescence device in which a dark spot having an area forms in the electroluminescence device when exposed to the gas, and the concentration of the gas contained in an ambient atmosphere detected by exposing the electroluminescence device to the ambient atmosphere and measuring increasing rate of the total area of the dark spot.

29. The gas sensor according to claim 28 **characterized by** said electroluminescence device including a first portion that is permanently sealed from the atmosphere and a second portion that is switched between protected and non-protected states.

30. The gas sensor according to claim 29 **characterized by** the first portion protected from the atmosphere by providing at least a substrate and at least one of a passivation film and sealing can to cover the electroluminescence device.

31. The gas sensor according to claim 29 or 30 **characterized by** the second portion initially protected by a cover member and said cover member at least partially removed in the non-protected state.

32. The gas sensor according to any one of claims 28 to 31 **characterized by** said electroluminescence device protected at least by a substrate and one of a passivation film or sealing can, and said sensor exposed to the ambient atmosphere by providing a through-hole in part of said passivation film or the sealing can.

33. The gas sensor according to claim 32 **characterized by** said sensor further comprising a member for providing a through-hole in part of said passivation film or sealing can.

34. The sensor according to any one of claims 28 to 33 **characterized by** said measuring the increasing rate of the total area of the dark spot being performed by measuring the decreasing rate of luminance of the electroluminescence device in a state in which a constant voltage is applied to the electroluminescence device.

35. The gas sensor according to any one of claims 28 to 33 **characterized by** said measuring the increasing rate of the total area of the dark spot being performed by measuring the increasing rate a voltage that is applied to the electroluminescence device in a state in which luminance obtained from the electroluminescence device is constant.

36. The gas sensor according to any one of claims 28 to 35 **characterized by** said electroluminescence device having a structure including an electroluminescence layer and a pair of electrodes with the electroluminescence layer held between the pair of electrodes and said gas reducing or oxidizing at least one of said electrodes and the electroluminescence layer.

37. The gas sensor according to any one of claims 28 to 36 **characterized by** said electroluminescence device being an organic electroluminescence device.

38. A method for storing a gas detecting apparatus **characterized by** comprising:
supplying a gas that is inert relative to an electroluminescence device provided in the gas detecting apparatus or a vacuum apparatus for producing a vacuum; and
placing at least said electroluminescence device under the inert gas or under vacuum using the vacuum apparatus, until the gas detecting apparatus is used.

39. A storage vessel for storing a gas sensor which detects the presence of a gas **characterized by** the gas sensor including an electroluminescence device in which a dark spot forms in the electroluminescence device when exposed to the gas and presence of the gas contained in an ambient atmosphere being detected by exposing the electroluminescence device to the ambient atmosphere and detecting the formation of the dark spot, said storage vessel comprising:
a storage section for storing at least said electroluminescence device; and
a switching member for switching between isolation from and exposure to the exterior of the storage vessel.

40. The storage vessel according to claim 39 **characterized by** further comprising a filling section for filling said storage section with a gas that is inert relative to said electroluminescence device.

41. The storage vessel according to claim 39 or 40 **characterized by** further comprising a connection section connecting the interior of said storage section to an externally provided device for filling the storage section with a gas that is inert relative to said electroluminescence device, the connection section including a mechanism which is opened when the former and the latter are connected and isolating the exterior of the storage section from the interior thereof when the former and the latter are not connected.

42. The storage vessel according to any one of claims 39 to 41 **characterized by** further comprising a suction section for producing an approximate vacuum in the storage section.

43. The storage vessel according to any one of claims 39 to 42 **characterized by** further comprising a connection section connecting the interior of said storage section and an externally provided suction section, the connection section comprising a mechanism which is opened when the former and the latter are connected, and isolates the exterior of the storage section from the interior thereof when the former and the latter are not connected.

44. A storage vessel for storing a gas sensor which detects the presence of a gas **characterized by** the gas sensor including an electroluminescence device in which a dark spot having an area forms in the electroluminescence device when exposed to the gas and presence of the gas contained in an ambient atmosphere being detected by exposing the electroluminescence device to the ambient atmosphere and measuring increase of the area of the dark spot, said storage vessel comprising:
a storage section for storing at least said electroluminescence device; and
a switching member for switching between isolation from and exposure to the exterior of the storage vessel.

45. The storage vessel according to claim 44 **characterized by** further comprising a filling section for filling said storage section with a gas that is inert relative to said electroluminescence device.

46. The storage vessel according to claim 44 or 45 **characterized by** further comprising a connection section connecting the interior of said storage section to an externally provided device for filling the storage section with a gas that is inert relative to said electroluminescence device, the connection section including a mechanism which is opened when the former and the latter are connected, and isolates the exterior of the storage section from the interior thereof when the former and the latter are not connected.

47. The storage vessel according to any one of claims 44 to 46 **characterized by** further comprising a suction section for producing an approximate vacuum in the storage section.

48. The storage vessel according to any one of claims 44 to 47 **characterized by** further comprising a connection section connecting the interior of said storage section and an externally provided suction section, the connection section comprising a mechanism which is opened when the former and the latter are connected and isolating the exterior of the storage section from the interior thereof when the former and the latter are not connected.

49. A storage vessel for storing a gas sensor which detects the concentration of a gas **characterized by** the gas sensor including an electroluminescence device in which a dark spot having an area forms in the electroluminescence device when exposed to the gas and the concentration of the gas contained in an ambient atmosphere being detected by exposing the electroluminescence device to the ambient atmosphere and measuring increasing rate of the area of the dark spot, said storage vessel comprising:
a storage section for storing at least said electroluminescence device; and
a switching member for switching between isolation from and exposure to the exterior of the storage vessel.

50. The storage vessel according to claim 49 **characterized by** further comprising a filling section for filling said storage section with a gas that is inert relative to said electroluminescence device.

51. The storage vessel according to claim 49 or 50 **characterized by** further comprising a connection section connecting the interior of said storage section to an externally provided device for filling the storage section with a gas that is inert relative to said electroluminescence device, the connection section including a mechanism which is opened when the former and the latter are connected and isolating the exterior of the storage section from the interior thereof when the former and the latter are not connected.

52. The storage vessel according to any one of claims 49 to 51 **characterized by** further comprising a suction section for producing an approximate vacuum in the storage section.

53. The storage vessel according to any one of claims 49 to 52 **characterized by** further comprising a connection section connecting the interior of said storage section and an externally provided suction section, the connection section comprising a mechanism which is opened when the former and the latter are connected, and isolates the exterior of the storage section from the interior thereof when the former and the latter are not connected.
